# EUROPÄISCHE PATENTSCHRIFT

(11) **EP 2 739 894 B1**
(45) Veröffentlichungstag und Bekanntmachung des Hinweises auf die Patenterteilung: **09.09.2015**
(21) Anmeldenummer: 12737481.7
(22) Anmeldetag: 04.07.2012
(51) Int. Cl.: F16L 55/165, F16L 55/18, H01J 61/40

(54) **VORRICHTUNG ZUM AUSHÄRTEN VON BESCHICHTUNGEN ODER KUNSTSTOFFLINERN AUF DER INNENWANDUNG LANGGESTRECKTER HOHLRÄUME**
DEVICE FOR CURING COATINGS OR PLASTIC LINERS ON THE INNER WALL OF ELONGATED CAVITIES
DISPOSITIF PERMETTANT DE DURCIR DES REVÊTEMENTS OU LINERS EN MATIÈRE PLASTIQUE SUR LA PAROI INTÉRIEURE DE CAVITÉS ALLONGÉES

(30) Priorität: 04.08.2011 DE 102011109386
(43) Veröffentlichungstag der Anmeldung: 11.06.2014
(73) Patentinhaber: Heraeus Noblelight GmbH, 63450 Hanau (DE)
(72) Erfinder: ARNOLD, Thomas, 63856 Bessenbach (DE)
(74) Vertreter: Kühn, Hans-Christian
(86) Internationale Anmeldenummer: PCT/EP2012/002801
(87) Internationale Veröffentlichungsnummer: WO 2013/017190

(56) Entgegenhaltungen:
- EP-A1- 1 849 497
- WO-A1-00/28575
- WO-A1-2005/031794
- WO-A1-2010/075946
- CH-A- 328 598
- DE-A1- 10 145 648
- DE-U1- 29 820 521
- JP-A- 2009 137 128

## Beschreibung

Die vorliegende Erfindung betrifft eine Vorrichtung zum Aushärten von Beschichtungen oder Kunststofflinern auf der Innenwandung langgestreckter Hohlräume, aufweisend eine UV-Lampe zur Emission optischer Strahlung mit einem Hüllkolben.

Zur Sanierung von Rohr- und Kanalsystemen werden seit vielen Jahren Renovierungsverfahren eingesetzt, durch die die Funktionstüchtigkeit der Rohr- und Kanalsysteme wiederhergestellt und damit deren Lebensdauer verlängert werden kann.

Als Renovierungsverfahren werden neben Beschichtungsverfahren zur Beschichtung der Innenwandung der Hohlräume auch Liner eingesetzt, bei denen es sich um Faserverbundwerkstoffe handelt, die aus mit Harzen getränkten textilen Materialien, beispielsweise Glasfasern, bestehen.

Die Aushärtung der Beschichtung oder des Harzes erfolgt im Rohr- oder Kanalsystem und kann beispielsweise thermisch durch das Einbringen von heißem Wasser oder von Wasserdampf oder optisch unter Verwendung von ultravioletter Strahlung erfolgen. Liner zur thermischen Härtung müssen gekühlt gelagert werden und sind auch bei kühler Lagerung nur begrenzt haltbar. Die Verwendung optischer Verfahren hat den Vorteil einer besseren Lagerfähigkeit; sie sind darüber hinaus energieeffizient und umweltschonend.

### Stand der Technik

Die JP 2009-137128 A beschreibt eine Vorrichtung zum Aushärten von Beschichtungen auf der Innenwand langgestreckter Hohlräume mittels UV-Lampe. Es werden hier Quecksilber- oder Gallium-Lampen verwendet.

Eine weitere Vorrichtung für die Bestrahlung von Innenwänden langgestreckter Hohlräume, insbesondere für die Aushärtung strahlungshärtbarer Kunststofflaminate ist ferner aus der CA 2,337,239 A1 bekannt. Die im Hohlraum verfahrbare Vorrichtung ist mit UV-Lampen bestückt, die in einer Lampenfassung angeordnet sind und auf der gegenüberliegenden Seite eine Druckfeder aufweisen. Durch einen Gewindespindeltrieb wird eine variable Anpassung des Lampenabstands zur Innenwand des zu härtenden Kunstharz-Laminats ermöglicht. Eine weitere Strahlungsquelle für die Bestrahlung mit UV-Strahlung von Innenwänden langgestreckter Hohlräume wird in der DE 298 20 521 U1 vorgeschlagen. Die Strahlungsquelle weist an den Enden gefederte, in der Rohrquerschnittsebene angeordnete Laufeinheiten auf, die miteinander verbunden sind und die jeweils ein axial liegendes Quarzglasrohr aufweisen. Innerhalb des Quarzglasrohres ist eine Lampe angeordnet, die zur Bestrahlung des Rohrinnenraumes dient.

In der DE 101 45 648 A1 ist Bestrahlungsvorrichtung zur Bestrahlung von Objekten offenbart, bei der als Strahlungsquelle eine Gasentladungslampe mit einem Gallium-haltigen Füllgas vorgesehen ist.

Darüber hinaus lehrt die CH 328 598 A ein aus Quarzglas bestehendes Ultraviolettfilter, das als Wandung von Gasentladungsröhren verwendet wird. Dieses Ultraviolettfilter hat den Zweck, bestimmte Gebiete des UV-Spektrums selektiv auszusondern.

### Technische Aufgabe

Reines Quarzglas ist für UV-Strahlung im Wellenlängenbereich bis in den UVC-VUV-Bereich transparent und daher bevorzugtes Lampenmaterial für UV-Lichtquellen.

Werden derartige Lampen in Vorrichtungen zum Aushärten von Beschichtungen oder Kunststofflinern eingesetzt, emittieren diese neben der Arbeitsstrahlung aber auch einen Anteil an kurzwelligerer ultravioletter Strahlung, die zu Gesundheitsschäden führen oder die Alterung in der Nähe liegender Bauteile verursachen kann. Dies gilt insbesondere für Bauteile aus Kunststoff.

Der Erfindung liegt daher die Aufgabe zugrunde, eine Vorrichtung zum Aushärten von Beschichtungen oder Kunststofflinern auf der Innenwandung langgestreckter Hohlräume anzu geben, die eine hohe Lebensdauer aufweist, und bei der die Gefahr von Gesundheits- und Materialschäden vermindert ist.

### Allgemeine Beschreibung der Erfindung

Diese Aufgabe wird ausgehend von einer Rohr- und Kanalsanierungsvorrichtung der eingangs genannten Gattung erfindungsgemäß dadurch gelöst, dass der Hüllkolben ein Gallium-haltiges Füllgas enthält, und dass ein optisches Filterelement zur Verminderung der Emission eines ultravioletten Strahlungsanteils der optischen Strahlung vorgesehen ist, welches in einem Wellenlängenbereich von 400 nm bis 450 nm eine spektrale Transmission von mindestens 80%cm⁻¹ aufweist und dessen Kantenwellenlänge im Bereich von 350 nm bis 380 nm liegt.

Bei bisherigen Rohr- und Kanalsanierungsvorrichtungen wurde reines Quarzglas, welches für UV-Strahlung im Wellenlängenbereich bis den UVC-VUV-Bereich transparent ist, als Lampenmaterial für die UV-Lampe eingesetzt.

Gemäß der Erfindung werden davon ausgehend zwei Modifikationen vorgeschlagen, von denen eine das Emissionsspektrum der im Hüllkolben erzeugten Strahlung und die andere die Anpassung dieses Emissionsspektrums an die Gegebenheiten beim bestimmungsgemäßen Einsatz der Vorrichtung betrifft.

Die Dotierung des Füllgases mit Gallium erzeugt ein charakteristisches Emissionsspektrum. Die so erzeugte Strahlung zeigt ausgeprägte Intensitätsmaxima in einem Wellenlängenbereich, der den Arbeitsbereich der Vorrichtung zum Aushärten von Beschichtungen oder Kunststofflinern auf der Innenwandung langgestreckter Hohlräume abdeckt.

Der bevorzugte Wellenlängen-Arbeitsbereich der eingesetzten Strahlung liegt zwischen 400 nm bis 450 nm. Es hat sich gezeigt, dass die emittierte Strahlung mit einer Wellenlänge kleiner als 400 nm und größer als 450 nm zur Aushärtung der Beschichtungen oder Kunststoffliner nicht unbedingt erforderlich ist.

Allerdings emittiert das Gallium-haltige Füllgas auch außerhalb des Arbeitsbereichs und insbesondere im ultravioletten Wellenlängenbereich.

Zur Anpassung des erzeugten Spektrums an den Arbeitsbereich wird der UV-Strahlungsanteil durch Einsatz des optischen Filterelements vermindert oder beseitigt. Die vom optischen Filterelement verminderte oder beseitigte Strahlung umfasst den UV-Wellenlängenbereich oder einen Teil davon, so dass Gesundheitsschäden durch emittierte UV-Strahlung vermieden und gleichzeitig eine hohe Lebensdauer der in der Nähe liegenden Bauteile der Vorrichtung ermöglicht wird.

Das optische Filterelement weist zu diesem Zweck eine Kantenwellenlänge im Bereich von 350 nm bis 380 nm auf. Die Kantenwellenlänge entspricht derjenigen Wellenlänge, bei der der spektrale Reintransmissionsgrad die Hälfte der Maximaldifferenz der Reintransmissionsgrade von Sperr- und Durchlassbereich beträgt. Der spektrale Reintransmissionsgrad abstrahiert von den Reflexionsverlusten und versteht sich per Definition als das Verhältnis des ausdringenden spektralen Strahlungsflusses zu dem eingedrungenen Strahlungsfluss.

Das optische Filterelement ist als Beschichtung oder als Dotierung eines Substrates ausgeführt. Bei dem Substrat handelt es sich im einfachsten Fall um den Hüllkolben der UV-Lampe.

In einer bevorzugten Modifikation ist vorgesehen, dass die Strahlungsquelle im Wellenlängenbereich von 400 nm bis 450 nm mindestens eine Hauptemissionslinie aufweist, deren Wellenlänge um mindestens 10 nm und höchstens 50 nm größer ist als die Kantenwellenlänge.

Das Filterelement eliminiert oder schwächt die Anteile der UV-Strahlung im Emissionsspektrum, die nicht für die Aushärtung der Beschichtung oder des Liners benötigt werden. Dadurch verbleibt jedoch nur noch ein enger Wellenlängenbereich, als nutzbare Arbeitsstrahlung. Daher ist eine Hauptemission in diesem Wellenlängenbereich ist für den bestimmungsgemäßen Einsatz der Vorrichtung besonders wichtig.

Dadurch, dass die Wellenlänge der Hauptemission zur Kantenwellenlänge des optischen Filterelements unmittelbar benachbart ist, wird erreicht, dass etwaige unerwünschte Anteile an UV-Strahlung der Hauptemission absorbiert werden. Andererseits wird dadurch, dass die Wellenlänge um mindestens 10 nm größer ist als die Kantenwellenlänge, die Emission der Hauptemissionslinie nicht übermäßig beeinträchtigt. Ist die Wellenlänge der Hauptemissionslinie um mehr als 50 nm größer als die Kantenwellenlänge, besteht einerseits die Gefahr, dass der Anteil unerwünschter, kurzwelliger ultravioletter Strahlung nicht effektiv minimiert wird. Andererseits ist bei einer großen Kantenwellenlänge der für eine Hauptemissionslinie noch zur Verfügung stehende Wellenlängenbereich im Arbeitsbereich sehr schmal, so dass die Gefahr besteht, dass eine hinreichende Bestrahlungsintensität nicht erreichbar ist.

Eine bevorzugte Variante der Vorrichtung sieht vor, dass das optische Filterelement aus Aluminium-dotiertem Quarzglas gefertigt ist.

Ein optisches Filterelement aus Aluminium-dotiertem Quarzglas ist chemisch und thermisch stabil und kann im Gegensatz zu einer Beschichtung nicht beschädigt werden.

Es hat sich als günstig erwiesen, wenn das optische Filterelement einen Aluminiumgehalt im Bereich von 10 Gew.-ppm bis 20 Gew.-ppm aufweist.

Ein optisches Filterelement mit einem Aluminiumgehalt kleiner als 10 Gew.-ppm führt zu einer geringen Reduktion der unerwünschten Anteile der UV-Strahlung. Ein optisches Filterelement mit einem Aluminiumgehalt größer als 20 Gew.-ppm reduziert merklich die spektrale Transmission im Arbeitsbereich.

In einer alternativen bevorzugten Variante ist vorgesehen, dass das optische Filterelement aus Cer-dotiertem Quarzglas gefertigt ist.

Ein optisches Filterelement aus Cer-dotiertem Quarzglas ist chemisch und thermisch stabil und kann im Gegensatz zu einer Beschichtung nicht beschädigt werden.

In einer vorteilhaften Ausgestaltung ist vorgesehen, dass das optische Filterelement ein Quarzglas-Hohlzylinder ist, in dem die UV-Lampe angeordnet ist.

Durch die Anordnung der UV-Lampe in einem Quarzglas-Hohlzylinder wird die UV-Lampe vor mechanischen Einwirkungen und vor Verunreinigungen geschützt. Ein Quarzglas-Hohlzylinder ist leicht zu reinigen und zu ersetzen und ein Filterelement in Form eines Quarzglas-Hohlzylinders ist einfach und kostengünstig zu fertigen. Durch die Rohrform wird eine möglichst isotrope Absorption der vom UV-Strahler emittierten UV-Strahlung in allen Raumrichtungen gewährleistet. Der Außendurchmesser des Quarzglas-Hohlzylinders kann an die Innengeometrie des Kanals oder Rohres angepasst sein.

In einer weiteren bevorzugten Ausgestaltung ist vorgesehen, dass der Quarzglas-Hohlzylinder die UV-Lampe gasdicht umschließt und eine gasdichte Abdichtung zur Stromdurchführung für die elektrische Kontaktierung der UV-Lampe aufweist.

Durch die Anordnung der UV-Lampe in einem Quarzglas-Hohlzylinder wird die UV-Lampe vor mechanischen Einwirkungen geschützt. Dadurch, dass der Quarzglas-Hohlzylinder die UV-Lampe gasdicht umschließt und eine gasdichte Abdichtung zur Stromdurchführung für die elektrische Kontaktierung der UV-Lampe aufweist, wird insgesamt eine kompakte Bauform ermöglicht. Der Quarzglas-Hohlzylinder kann eine oder mehrere gasdichte Abdichtungen aufweisen. Er kann einseitig oder zweiseitig gesockelt ausgeführt sein. Der Quarzglas-Hohlzylinder kann mit einem Edelgas gefüllt sein oder ein Vakuum aufweisen.

Im einfachsten Fall ist das optische Filterelement der Hüllkolben der UV-Lampe.

Ein Filterelement, das gleichzeitig der Hüllkolben der UV-Lampe ist, ist kostengünstig zu fertigen und ermöglicht eine besonders kompakte Bauform der Vorrichtung.

Alternativ oder ergänzend dazu hat sich aber auch als günstig erwiesen, wenn das optische Filterelement als Beschichtung auf dem Quarzglas-Hohlzylinder und/oder dem Hüllkolben ausgeführt ist.

Die Beschichtung ist dabei auf der Außenseite und/oder der Innenseite des Quarzglas-Hohlzylinders und/oder des Hüllkolbens vorgesehen. Beschichtungen können einfach aufgebracht werden und sind in ihren Eigenschaften variabel einstellbar. Eine geeignete Beschichtung kann beispielsweise als mehrschichtiger Interferenz-Reflexionsfilter aus Titandioxid und Siliziumdioxid ausgebildet sein.

Nachfolgend wird die Erfindung anhand eines Ausführungsbeispiels und einer Zeichnung näher beschrieben. Im Einzelnen zeigt in schematischer Darstellung:
- **Figur 1**: eine Ausführungsform einer Lampeneinheit der erfindungsgemäßen Vorrichtung mit einem optischen Filterelement in Form eines Quarzglas-Hohlzylinders, und
- **Figur 2**: eine spektrale Intensitätsverteilung der UV-Lampe, in die schematisch eine Transmissionskurve eines dotierten Quarzglases eingetragen ist.

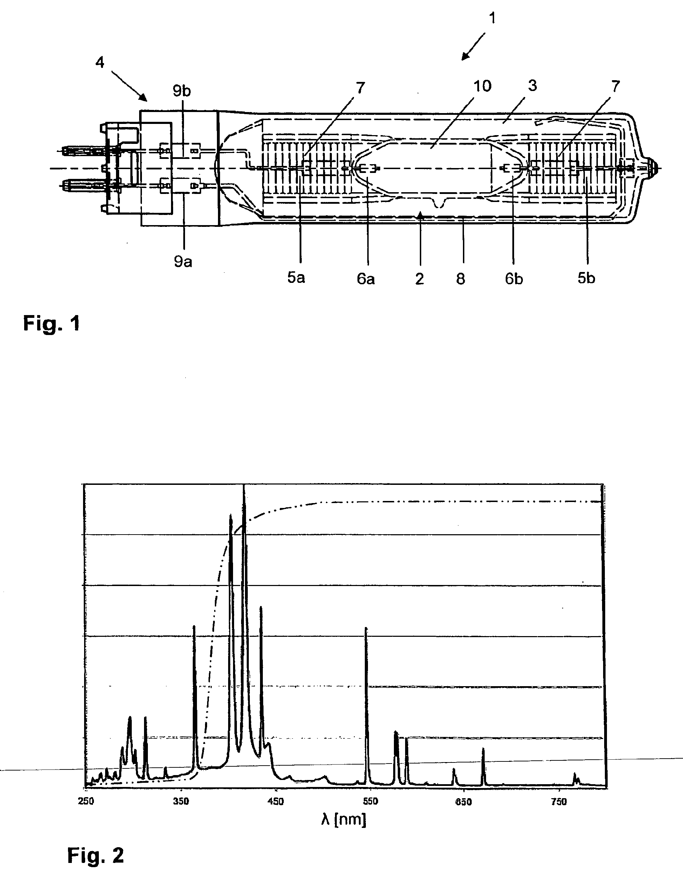

Die erfindungsgemäße Vorrichtung zum Aushärten von Beschichtungen oder Kunststofflinern auf der Innenwandung langgestreckter Hohlräume umfasst eine Lampeneinheit, wie sie in **Figur 1** dargestellt ist, und der der insgesamt die Bezugsziffer 1 zugeordnet ist. Die Lampeneinheit 1 umfasst eine UV-Lampe zur Emission optischer Strahlung, einen gasdichten Quarzglas-Hohlzylinder 3 und eine gasdichte Abdichtung 4. Die UV-Lampe ist ein Quecksilbermitteldruckstrahler 2 mit einer Nennleistung von 600 W. Ansonsten sind zum Aushärten von Beschichtungen oder Kunststofflinern Strahler mit einer Nennleistung von 100 W bis 2.000 W vorgesehen. Der Quecksilbermitteldruckstrahler 2 weist einen gasdichten Hüllkolben 10 auf, der mit Quecksilber, Edelgas und Gallium gefüllt ist. In den beiden gasdichten Abdichtungen 7 des Quecksilbermitteldruckstrahlers 2 ist jeweils eine Stromdurchführung 5a, 5b zur elektrischen Kontaktierung der Elektroden 6a, 6b vorgesehen.

### Beispiel 1

Der Quecksilbermitteldruckstrahler 2 ist von einem Quarzglas-Hohlzylinder 3 umgeben, der aus einer Quarzglasqualität gefertigt ist, die von der Heraeus Quarzglas GmbH & Co. KG, Hanau, unter der Bezeichnung "HLQ382" angeboten wird. Dieses Quarzglas enthält 0,6 ppm Lithium, 0,3 ppm Natrium, 0,4 ppm Kalium, 0,05 ppm Magnesium, 0,5 ppm Kalzium, 0,1 ppm Eisen, weniger als 0,05 ppm Kupfer, weniger als 0,05 ppm Mangan und 15 ppm Aluminium. Der Quarzglas-Hohlzylinder 3 dient als Filterelement im Sinne dieser Erfindung.

### Beispiel 2

In einer alternativen Ausführungsform ist der Quarzglas-Hohlzylinder 3 aus einem Cerdotierten Quarzglas gefertigt, wie es beispielsweise von der Heraeus Quarzglas GmbH & Co. KG, Hanau, unter der Bezeichnung "M 382 Plus" bzw. "M382 S Plus" angeboten wird. In diesem Fall enthält das Quarzglas als chemische Verunreinigungen 1 ppm Lithium, 1 ppm Natrium, 0,8 bzw. 0,1 ppm Kalium, 0,1 ppm Magnesium, 1,0 bzw. 0,1 ppm Kalzium, 0,8 bzw. 0,2 ppm Eisen, 0,1 ppm Kupfer, 0,1 ppm Chrom, 0,05 ppm Mangan und 20 bzw. 10 ppm Aluminium. Darüber hinaus ist das Quarzglas mit Cer dotiert.

Der Quarzglas-Hohlzylinder 3 umschließt gasdicht den Quecksilbermitteldruckstrahler 2. Der Hohlraum 8 zwischen Quarzglas-Hohlzylinder 3 und Quecksilbermitteldruckstrahler 2 ist mit dem Edelgas Argon gefüllt. Durch die gasdichte Abdichtung 4 des Quarzglas-Hohlzylinders 3 sind zwei Stromdurchführungen 9a, 9b zur elektrischen Kontaktierung des Quecksilbermitteldruckstrahlers 2 vorgesehen.

**Figur 2** zeigt eine spektrale Intensitätsverteilung des Quecksilbermitteldruckstrahlers 2 im Wellenlängenbereich zwischen 250 und 750 nm. Der Wellenlängenbereich der Arbeitsstrahlung zum Aushärten von Beschichtungen oder Kunststofflinern beträgt 400 bis 450 nm. Der Quecksilbermitteldruckstrahler 2 gibt Strahlung außerhalb und innerhalb dieses Arbeitsbereichs ab. Insbesondere weist das Spektrum zwei Hauptemissionslinien bei etwa 410 nm und 420 nm auf.

Um den kurzwelligen Anteil der Emission (E) außerhalb des Arbeitswellenlängenbereichs zu minimieren, wird der Quarzglas-Hohlzylinder 3 als Filterglas eingesetzt. In die spektrale Strahlstärkeverteilung obengenannter Strahlungsquelle ist schematisch die Transmissionskurve (T: Transmission) des Quarzglas-Hohlzylinders 3 gemäß Beispiel 1 eingetragen. Die spektrale Transmission des Quarzglases (ohne Streu- und Reflexionsverluste an den Oberflächen) innerhalb des Arbeits-Wellenlängenbereichs beträgt mehr als 90 %cm⁻¹ Es ist aber erkennbar, dass Wellenlängen unterhalb von etwa 400 nm durch das optische Filterelement zunehmend absorbiert und dadurch herausgefiltert werden.

Die Kantenwellenlänge des Filters liegt bei etwa 380 nm. Die beiden genannten Hauptemissionslinien bei etwa 410 nm und 420 nm werden durch die Filterwirkung des Quarzglas-Hohlzylinders 3 zwar tangiert, aber nicht beseitigt.

## Patentansprüche

1. Vorrichtung zum Aushärten von Beschichtungen oder Kunststofflinern auf der Innenwandung langgestreckter Hohlräume, aufweisend eine UV-Lampe (2) zur Emission optischer Strahlung mit einem Hüllkolben (10), **dadurch gekennzeichnet, dass** der Hüllkolben (10) ein Gallium-haltiges Füllgas enthält, und dass ein optisches Filterelement zur Verminderung der Emission eines ultravioletten Strahlungsanteils der optischen Strahlung vorgesehen ist, welches in einem Wellenlängenbereich von 400 nm bis 450 nm eine spektrale Transmission von mindestens 80%cm⁻¹ aufweist und dessen Kantenwellenlänge im Bereich von 350 nm bis 380 nm liegt.

2. Vorrichtung nach Anspruch 1, **dadurch gekennzeichnet, dass** die UV-Lampe (2) im Wellenlängenbereich von 400 nm bis 450 nm mindestens eine Hauptemissionslinie aufweist, deren Wellenlänge um mindestens 10 nm und höchstens 50 nm größer ist als die Kantenwellenlänge.

3. Vorrichtung nach Anspruch 1 oder 2, **dadurch gekennzeichnet, dass** das optische Filterelement (3) aus Aluminium-dotiertem Quarzglas gefertigt ist.

4. Vorrichtung nach Anspruch 3, **dadurch gekennzeichnet, dass** der Aluminiumgehalt im Bereich von 10 Gew.-ppm bis 20 Gew.-ppm liegt.

5. Vorrichtung nach Anspruch 1 oder 2, **dadurch gekennzeichnet, dass** das optische Filterelement aus Cer-dotiertem Quarzglas gefertigt ist.

6. Vorrichtung nach einem der vorhergehenden Ansprüche, **dadurch gekennzeichnet, dass** das optische Filterelement ein Quarzglas-Hohlzylinder (3) ist, in dem die UV-Lampe (2) angeordnet ist.

7. Vorrichtung nach Anspruch 6, **dadurch gekennzeichnet, dass** der Quarzglas-Hohlzylinder (3) die UV-Lampe (2) gasdicht umschließt und eine gasdichte Abdichtung (4) zur Stromdurchführung für die elektrische Kontaktierung der UV-Lampe (2) aufweist.

8. Vorrichtung nach einem der vorhergehenden Ansprüche, **dadurch gekennzeichnet, dass** das optische Filterelement der Hüllkolben ist.

9. Vorrichtung nach einem der vorhergehenden Ansprüche, **dadurch gekennzeichnet, dass** das optische Filterelement als Beschichtung auf dem Hüllkolben (10) ausgeführt ist.

10. Vorrichtung nach einem der vorhergehenden Ansprüche 6 oder 7, **dadurch gekennzeichnet, dass** das optische Filterelement als Beschichtung auf dem Quarzglas-Hohlzylinder (3) oder auf dem Quarzglas-Hohlzylinder (3) und dem Hüllkolben (10) ausgeführt ist.

## Claims

1. A device for the curing of coatings or plastic liners on the internal wall of elongated hollow spaces comprising an UV lamp (2) with a bulb (10) for emission of optical radiation, **characterised in that** the bulb (10) contains a gallium-containing filling gas and **in that** an optical filter element is provided in order to reduce the emission of an ultraviolet fraction of the optical radiation, which has a spectral transmission of at least 80%cm⁻¹ in a wavelength range of 400 nm to 450 nm and has an edge wavelength in the range of 350 nm to 380 nm.

2. Device according to claim 1, **characterised in that** the UV lamp (2) comprises at least one main emission line in the wavelength range of 400 nm to 450 nm at a wavelength that is at least 10 nm and at most 50 nm above the edge wavelength.

3. Device according to claim 1 or 2, **characterised in that** the optical filter element (3) is made from aluminium-doped quartz glass.

4. Device according to claim 3, **characterised in that** the aluminium content is in the range of 10 ppm by weight to 20 ppm by weight.

5. Device according to claim 1 or 2, **characterised in that** the optical filter element is made from cerium-doped quartz glass.

6. Device according to any one of the preceding claims, **characterised in that** the optical filter element (3) is a quartz glass hollow cylinder (3) that has an UV lamp (2) arranged in it.

7. Device according to claim 6, **characterised in that** the the quartz glass hollow cylinder (3) surrounds the UV lamp (2) in gas-tight manner and comprises a gas-tight sealing (4) for conducting current for electrical contacting of the UV lamp (2).

8. Device according to any one of the preceding claims, **characterised in that** the optical filter element is the bulb.

9. Device according to any one of the preceding claims, **characterised in that** the optical filter element is provided as coating on the bulb (10).

10. Device according to any one of the preceding claims 6 or 7, **characterised in that** the optical filter element is provided as coating on the quartz glass hollow cylinder (3) or on the quartz glass hollow cylinder (3) and the bulb (10).

## Revendications

1. Dispositif destiné au durcissement de revêtements et de doublures plastique sur la paroi interne de cavités étirées en longueur, présentant une lampe UV (2) pour émettre un rayonnement optique comprenant une double enveloppe (10), **caractérisé en ce que** la double enveloppe (10) contient un gaz de remplissage contenant du gallium, et qu'un élément de filtre optique est prévu pour réduire l'émission d'une part de rayonnement ultraviolet du rayonnement optique, lequel présente une transmission spectrale d'au moins 80%cm⁻¹ dans une plage de longueur d'onde de 400 nm à 450 nm et dont la longueur d'onde de bord est située dans la plage de 350 nm à 380 nm.

2. Dispositif selon la revendication 1, **caractérisé en ce que** la lampe UV (2) présente au moins une ligne d'émission principale dans la plage de longueur d'onde de 400 nm à 450 nm, dont la longueur d'onde est d'au moins 10 nm et d'au plus 50 nm supérieure à celle de la longueur d'onde de bord.

3. Dispositif selon la revendication 1 ou 2, **caractérisé en ce que** l'élément de filtre optique (3) est fabriqué en verre quartzeux dopé en aluminium.

4. Dispositif selon la revendication 3, **caractérisé en ce que** la teneur en aluminium est située dans la plage de 10 ppm en poids à 20 ppm en poids.

5. Dispositif selon la revendication 1 ou 2, **caractérisé en ce que** l'élément de filtre optique est fabriqué en verre quartzeux dopé en cérium.

6. Dispositif selon l'une des revendications précédentes, **caractérisé en ce que** l'élément de filtre optique est un cylindre creux en verre quartzeux (3) dans lequel une lampe UV (2) est agencée.

7. Dispositif selon la revendication 6, **caractérisé en ce que** le cylindre creux en verre quartzeux (3) entoure la lampe UV (2) en étanchéité aux gaz et présente une étanchéité (4) étanche aux gaz pour faire passer le courant électrique pour le contact électrique de la lampe UV (2).

8. Dispositif selon l'une des revendications précédentes, **caractérisé en ce que** l'élément de filtre optique est la double enveloppe.

9. Dispositif selon l'une des revendications précédentes, **caractérisé en ce que** l'élément de filtre optique est conçu en tant que revêtement sur la double enveloppe (10).

10. Dispositif selon l'une des revendications précédentes 6 ou 7, **caractérisé en ce que** l'élément de filtre optique est conçu en tant que revêtement sur le cylindre creux en verre quartzeux (3) ou bien sur le cylindre creux en verre quartzeux (3) et la double enveloppe (10).
